# EUROPEAN PATENT APPLICATION

(11) **EP 1 376 423 A1**
(43) Date of publication of application: **02.01.2004**
(21) Application number: 02700788.9
(22) Date of filing: 26.02.2002
(51) Int. Cl.: G06F 17/60

(54) **SYSTEM AND METHOD FOR SELLING SUPPORTED COMMODITY**

(30) Priority: 27.02.2001 JP 2001053082
(71) Applicant: MENICON CO., LTD., Nagoya-shi, Aichi 460-0006 (JP)
(72) Inventor: TSUSHI, Yasuaki, c/o MENICON CO., LTD., Nagoya-shi, Aichi 460-0006 (JP)
(74) Representative: Nicholls, Michael John
(86) International application number: PCT/JP2002/001722
(87) International publication number: WO 2002/069216

(57) **Abstract**

An object of the invention to provide a sales method of novel form for sales of supported product requiring ongoing support, such as contact lenses, whereby a supplier of a product requiring support may realize efficient customer management while maintaining the conventional form of product providing service to the customer through a retail outlet. By utilizing a communications network system that employs computer 12, 14, 16, it can be realized support relationships, including supply of products, among three parties, namely, customers (new members and registered members), retail outlets, and the product supplier. The product supplier can directly chronologically administrate information relating to supported products using a database administered by them, while having a large number of retail outlet through which products are provided to the customer.

## Description

### TECHNICAL FIELD

The present invention relates to a sales system for products requiring ongoing support, due to the need for replacement at relatively brief intervals owing to reasons such assuring safety, or a short expiration date. The present invention is concerned with a novel sales system and sales method utilizing a computer system that includes communications network means and a database, suitable for use in selling contact lenses, for example.

### BACKGROUND ART

An exceeding wide variety of commercial goods are provided by product suppliers to consumers in the marketplace, and certain of these goods have relatively short service life, as compared to real estate, durable goods, and the like. Some of these goods, such as clothing, stationary, or food products, are simple consumer goods that do not require a high level of knowledge or technical skill in their selection or handing, and when the service life of such goods comes to the end, it is sufficient for the consumer to purchase more based on his or her own knowledge and authority, so that there is no fundamental need for aftermarket support. Certain other goods, however, despite service life that is not very long, require specialized knowledge for their replacement, replenishment, or supplementation in association with the end of their useful service life, and for this reason require aftermarket support. A typical specific example is contact lenses, as well as business operations control equipment, computers, and related devices which, in consideration of durability and advances in technology, fall under the category of good requiring aftermarket support.

Taking contact lenses by way of example, although there are differences depending on the material of the lenses, service life is about one day for disposable lenses used for only a short time, up to about 2 to 3 years for those intended to be used for longer periods. Once the expiration date has passed, the used contact lenses must be discarded and a new set of contact lenses purchased. Contact lenses require a proper prescription, made in consideration of the need for the inside face shape and outside dimensions to conform to the shape of the cornea, as well as the need for refractive power and lens type suited to the vision of wearer, and as such their selection and the like requires a high level of knowledge. In addition to this, it is necessary in the case of contact lenses to consider also various factors such as changes over time in the eyes of the wearer, any special conditions in his or her living environment, or a special requirement for vision correction. To make appropriate selection based on an understanding of these factors, it is important to accumulate data over time relating to the contact lenses used by a particular wearer. There is also value for wearers in accumulating individual data for contact lens wearers, since this information can in some cases serve as a valuable resource in the event that medical treatment of the eyes should become necessary at some point in the future, for example.

In recent years, contact lenses have come to be treated as ordinary mass produced, expendable goods; in association with an increase in the number of wearers of contact lenses of conventional types, referred to as "hard" types and "soft" types, sales of so-called "disposable" contact lenses, which have an extremely short service life, has been on the increase, which phenomenon has only accelerated the trend to treat contact lenses as mass produced, expendable goods. Contact lens retailers are now faced with an increasingly difficult state of affairs in terms of increased numbers of customers, changing customer flow patterns accompanying an increase in the number of retailers, increasing differentiation among contact lenses, which has made customer management by retail outlets less and less tenable.

The present invention was made in view of the state of affairs described above, and has as an object to provide a sales method of novel form, and a novel technique related therewith, for sales of supported product requiring ongoing support, such as contact lenses, whereby a supplier of a product requiring support may, utilizing a novel computer system, realize efficient customer management while maintaining the conventional mode of product providing service to the customer through a retail outlet, even in cases where individual customer management in a plurality of sales outlets is not realistically possible.

### DISCLOSURE OF THE INVENTION

The embodiments of the invention for achieving the stated object are set forth hereinbelow. Elements employed in the embodiments described hereinbelow may be employed in any of various possible combinations. The embodiments and technical features of the invention are not limited to those described herein, and should be understood on the basis of the inventive step disclosed in the description and drawings, or apparent to the practitioner of the art from this disclosure.

The invention in a first aspect thereof provides a sales method for a supported product requiring ongoing support, characterized in that (a) in response to a member registration application signal sent from a member client device provided for the use of new members to be supplied with the supported product, through communications network means to a server device provided for the use of a product supplier who will supply the supported product, (b) retail outlet information relating to a plurality of designated retail outlets pre-registered in a database is transmitted from the server device through the communications network means to the member client device, (c) in response to retail outlet designating information created when the new member selects any of the designated retail outlets based on the retail outlet information, and transmitted from the member client device through the communications network means to the server device, (d) information for the new member, together with assignment information that assigns the new member to a selected designated retail outlet, is stored in the database, and the new member is registered as a member; (e) the new member is registered in recurring membership fees assessment system as being subject to assessment of membership fee, and (f) on a condition of verification of recurring receipt of membership fees by the membership fee assessment system, in response to a request from a registered member whose has been registered as the member, the product supplier supplies the supported product on an ongoing basis to the registered member, through the selected designated retail outlet associated with the registered member in the assignment information.

According to the sales method of the present invention, a customer (new member) can be referred in advance to a designated retail outlet able to provide the appropriate support service; a designated retail outlet serving as the actual contact point for the support service may be selected and determined by the customer; and the process of referral and selection/determination of a designated retail outlet may be carried out in real time on a communications network that utilizes computers, whereby, there may be established for each individual customer a "virtual interactive space" among the three parties, namely, the product supplier, the retail outlet, and the customer, each individual customer being cognizant of the fact of having a custom-tailored virtual interactive space provided to him or her alone.

Accordingly, sales of a supported product requiring ongoing support may be carried out with minimal time and cost by means of the aforementioned virtual interactive space realized for the first time through utilization of a communications network that employs computers. Also, a customer registering as a new member may be provided with a sense of security and trust, when purchasing a supported product requiring ongoing support for the first time from a designated retail outlet, since the customer is aware that the retailer is provided with a quality guarantee by the product supplier; customer new member registration rates may be improved; and continued patronage of the selected designated retail outlet by the customer registered as a member may be encouraged thereby.

Additionally, as the registered member is supplied with the supported product on an ongoing basis, in contrast to the completion and execution of the conventional one-time sales contract typical for mass produced expendable goods, the transaction takes the form of an ongoing support contract. As a result, the obligation of recurring payment of the membership fee is imposed, as well as actively encouraging continued membership registration. Further, the new member signs an ongoing support contract with the product supplier rather than with an individual retailer, and when the contract is agreed to, a communications network means employing computers is utilized, whereby regardless of the place of residence of the new member, he or she may be provided with a "contract space" which, while virtual, is also directly and individually made between new member and the product supplier. Thus, as compared to the case of' signing a similar contract in the material world with a material retail establishment, for example, it is possible to know the product supplier directly, albeit in a virtual sort of way, whereby trust in the product supplier, and hence the determination to continue member registration, may be dramatically improved.

Furthermore, the designated retailer is merely a pickup point for the supported product being supplied to the registered member by the product supplier, and individual information management of registered members is carried out in a centralized manner using a database by servers administered by the product supplier. If there are large numbers of designated retail outlets and registered members, information 'about registered members can be individually and efficiently kept track of and managed, and designated retail outlets can be spared the significant labor entailed in information management for individual registered members.

Therefore, the sales method of the present invention makes it possible to establish readily and in a speedy manner on the basis of a high level of trust, support relationships, including supply of products, among three parties, namely, customers (new members and registered members), retail outlets, and the product supplier, utilizing a communications network system that employs computers. Thus, products and support may be supplied speedily to the customer, and without imposing an excessive burden on retail outlets, information relating to supported products for customers (registered members) may be administered directly 'by the product supplier, chronologically and easily with a high degree of accuracy.

In the sales method according to the present invention, the membership client device used by the person receiving provision of a product (new member) can be any device capable of exchanging information with the server device via communications network means, examples being the individual user's personal computer; a server computer or client computer connected to a small LAN; a portable PDA (Personal Digital Assistant), handheld computer, portable phone, or PHS; or an enabled household telephone or television device. As server devices employed by the product supplier, computers of various kinds capable of exchanging information via communications network means with members' client devices and accessing a database to store and administer data will be serviceable. The communications network means for connecting members' client devices to server devices is ideally the Internet, but would also include i-mode, java-i-mode, L-mode, and other Internet related systems, digital broadcast television systems, closed circuit systems, and the like. When transmitting a member registration application signal from a client device to a server device, this is preferably' accomplished, for example, by having the server device display on the client device items required for member registration in response to a registration application signal issued by the client device to the server device, whereupon the registration applicant (new member) enters the required items on the screen of the client device, and transmits the entered items together from the client device to the server device. Retail outlet information transmitted from the server device to the member client device will preferably include all information about the designated retail outlet registered in the database, as well as information selected with reference to information in the member registration application sent by the new member from the member client device, for example, information for designated retail outlets selected appropriately for the new member on the basis of geography or business hours, which information is transmitted and displayed on the member client device so that the new member can select or verify it.

In the sales method according to the present invention as described hereinabove, when a registered member is supplied with a supported product by a product supplier, various different forms may be employed depending on information of various kinds, including product type. To give a specific example, it is possible for a product supplier to provide a registered member with service in the form of replacement of a supported product at no additional cost on the condition that the recurring membership fee is collected, or in the form of replenishment or supplementation of a supported product on the condition of payment of a temporary supplemental fee in addition to recurring payment of the membership fees. In the case of contact lenses, for example, replacement at no additional cost could be provided on the condition of replacing one-half or more of the remaining contact lens; or replenishment or supplementation in association with a supplemental fee could, in the case of replenishment or supplemental provision within a short period of time, take the form of an increase in the amount of supplemental fee paid; or a penalty could be applied if the number of times that the product is supplied through replacement at no additional cost, replenishment or supplemental provision exceeds a certain limit within a predetermined time period.

As a general rule, a registered member is supplied with a supported product exclusively by a selected designated retail outlet selected in advance, which can have the effect of improving the quality of support and service to the registered member by the designated retail outlet, as well as simplifying administration of registered member information by the server device. Alternatively, the product supplier may supply the supported product on a one-time basis from a designated retail outlet other than the selected designated retail outlet assigned to the registered member, on the condition of recurring receipt of the membership fees by a registered member and in response to a request from the registered member. By authorizing such a one-time product provision mode, a registered member away from the selected designated retail outlet due to a vacation or business trip, for example, and needing to be supplied quickly with the product owing to an accident or the like, could nonetheless be accommodated quickly on a one-time basis. In such an instance, it would be preferable, for example, for the registered member to provide the designated retail outlet or product supplier directly, or through suitable communication means such as telephone or the Internet, with the ID or the like assigned to him or her, so that the registered member can be authenticated by the server device, and if necessary, individual information about the registered member quickly transmitted to the designated retail outlet or registered member being supplied with the product.

Where a registered member is supplied with a supported product, supported product supply information for the registered member is preferably stored in the aforementioned database, with individual information for the registered member being accumulated over time so as to enable improvement in the quality of service provided to the registered member.

The sales method according to the present invention as described hereinabove is applicable not only to sales of hard contact lenses and soft contact lenses, but also to those of disposable contact lenses and other types of contact lenses, whereby problems in terms of customer management associated with handling of contact lenses as mass produced, expendable goods, described earlier, may be effectively addressed; however, the sales method of the present invention is applicable also to various other products other than contact lenses that have a relatively short service life and require frequent replacement of the product, and whose selection requires a high level of knowledge, such that ongoing support is required. The method of the invention is applicable, for example, in sales of business communications equipment and control devices, computer devices, and the like.

In the sales method according to the present invention, it is preferable to conduct new member screening to determine whether the new member meets certain predetermined screening requirements in response to a member registration application signal sent by a new member from the member client device to the server device, based on information contained in the member registration application signal. On the condition that these screening requirements are met, information for the new member is stored in the database to register him or her as a member. By performing this screening process, it is possible to avoid future problems before they occur. Screening requirements for new members could include, for example, screening of ability to pay, based on data supplied by a credit reporting agency or the like, or checking whether the applicant has been a member in the past, and if so screening the information registered at that time, and so on. This screening of the new member could be carried out after member registration, for example, and where necessary, even after member registration has been completed, screening could be carried out on a periodic or nonrecurring basis to determine if predetermined conditions are met, and if the results of the screening so warrant, a warning issued to the registered member, or a registration cancellation action taken. Where screening in the above manner is performed for a new member or registered member, information resulting from the screening will preferably be sent to the new member or registered member.

According to the sales method of the present invention, particularly, when screening registered members, verification of receipt of recurring member fees from the registered member should be carried out on a periodic and/or as-needed basis. In the event that receipt of membership fees is not verified, membership fee nonpayment data stored in the database in association with the registered member. By conducting screening of registered members in this way, problems can be prevented before they occur, and loss to the product supplier resulting from such problems reduced. Registered members having membership fee nonpayment data associated with them in the database can be issued a notice warning him or her of failure to pay the membership fee, or of impending termination of membership registration; or in the event that the registered member requests product supply, a warning issued, and the product supplier or retail outlet alerted; or other appropriate measure taken.

In the sales method according to the present invention, certain useful information included in the information stored in the database may be provided to the registered member and/or designated retail outlet, provided there are no problems relating to disclosure thereof. When providing registered information in the database to a registered member or designated retail outlet, it is possible to use the mail, for example, although it is preferable to carry out such communication using the Internet or other communications network means. Specifically, for a registered member, certain information, pre-designated as disclosable, included in information relating to the registered member stored in the database could be made accessible by displaying the information on the member client device by transmitting it from the server device to the member client device. For an designated retail outlet, certain information, pre-designated as disclosable, included in information stored in the database could be sent on a periodic basis and/or on a one-time basis in response to a request from the designated retail outlet, from the server or product supplier to an designated retail outlet pre-registered in the database, or more appropriately, the designated retail outlet will be able to connect to the server device through communications network means, and access from the server device information stored in the aforementioned database through the retailer's client device used by the designated retail outlet. When providing information from the database in response to a request from a registered member or designated retail outlet, information will preferably be provided only on the condition of a matching ID or other unique identifying data for the registered member or designated retail outlet.

Further, in the sales method according to the present invention, various kinds of information besides information registered in the database as described above may be provided by the product supplier to registered members and/or designated retail outlets. For example, on the condition of receipt of the recurring membership fee, a registered member may be provided on a periodic and/or one-time basis with information relating to a supported product, the information being provided by the product supplier directly and/or through an designated retail outlet.

Yet further, in the sales method according to the present invention, where the supported product is contact lenses, for example, related items such as contact lens cases, disinfectors, and the like may also be supplied in response to a registered member's request; or where the supported product is contact lenses, consumable products such as storage solution, disinfecting solution, and the like may be supplied in response to a registered member's request, or periodically in anticipation of being used up. When providing such related products or consumable products, it is of course assumed that the registered member being supplied has paid the recurrent membership fees; in addition thereto, payment of a one-time supplemental fee may be set as an additional condition if needed. When providing such related products or consumable products, the member may receive supply service directly from his or her designated retail outlet, or receive supply service by home delivery, or through the agency of a convenience store, post office, or other existing store other than the designated retail outlet.

Additionally, in the sales method according to the present invention, collection of recurrent membership fees from registered members may be carried out under the administration of the product supplier: for example, it is possible to directly administer the server and database, or employ, by way of a membership fee' collection system, a credit card company different from the product supplier, with the product supplier or designated retail outlet verifying with the credit card company receipt of membership fees from registered members. Verification data of membership fees collected by a credit card company will preferably be stored serially in a database administered by the server device.

When implementing the sales method according to the present invention, designated retail outlets stored in the database may be paid by the product supplier a service fee commensurate with the number of registered members associated with an individual designated retail outlet. Data such as the number of registered members associated with individual designated retail outlets is preferably communicated by the product supplier to designated retail outlets, at the designated retail outlet's request, or periodically.

Additionally, in the sales method according to the present invention, it is possible to implement a referral system whereby new members may be referred by others, thereby aiming at increasing the number of members, and achieving more consistent service to registered members by product suppliers through the increased number of members. Specifically, by way of example, in response to a new member referral signal sent to a server device used by a product supplier, through communications network means by a referrer using the member client device used by the referrer, the server device may, through the communications network means, send to the referred new member retail outlet information relating to a supported product and to application for membership; when sending the retail outlet information and/or upon completion of member registration of the referred new member, the referrer who referred the new member may be sent a thank you by the product supplier. The referrer may be either an existing registered member or an unregistered member. By way of thanks, the referrer may be awarded points, with giveaways of various kinds selectively awarded depending on the number of points. Also, when a referred new member is provided with information relating to application for membership, the referrer may be contacted as well, regarding the fact of referral.

The invention in a second aspect thereof relates to a sales system suitable for working the supported product sales method according to the first aspect of the invention described hereinabove, and is characterized by comprising (g) a plurality of member client devices used by new members who are supplied with the supported product; (h) a server device for use by a product supplier supplying the supported product, (i) communications network means connecting the server device to the plurality of member client devices, and (j) a database for storing retail outlet information relating to a plurality of designated retail outlets that can serve as outlets for supplying the supported product to the new member, member information relating to registered members previously registered, and assignment information that associates each of all registered members with a certain selected designated retail outlet among the plurality of designated retail outlets, wherein the supported product sales system is designed such that in response to a member registration application signal sent from a the member client device to the server device through the communications network means, the retail outlet information pre-registered in the database is transmitted from the server device through the communications network means to the member client device; in response to retail outlet designating information created when the new member selects any of the designated retail outlets based on the retail outlet information, the designating information being transmitted from the member client device through the communications network means to the server device, assignment information that assigns the new member to a selected designated retail outlet is generated and stored in the database, information relating to the new member is registered as a registered member in member information in the database, and a series of processes registering the new registered member as being subject to collection of a membership fee is executed on a recurring membership fee collection system; in response to input of a request signal from the new registered member, and on the condition of verification of receipt of recurring membership fees from the registered member by the membership fee collection system, there is output a supply instruction signal that instructs the registered member to be supplied with the supported product by the product supplier through the selected designated retail outlet associated with the registered member in the assignment information.

In the sales system according to this second aspect of the invention, there may be advantageously realized, by means of software installed on the server device, a process wherein (k) in response to a member registration application signal sent from a the member client device to the server device through the communications network means, the retail outlet information pre-registered in the database is transmitted from the server device through the communications network means to the member client device; (1) in response to retail outlet designating information created when the new member selects any of the designated retail outlets based on the retail outlet information, the designating information being transmitted from the member client device through the communications network means to the server device, assignment information that assigns the new member to a selected designated retail outlet is generated and stored in the database, information relating to the new member is registered as a registered member in member information in the database, and a series of processes registering the new registered member as being subject to collection of a membership fee is executed on a recurring membership fee collection system; (m) in response to input of a request signal from the new registered member, and on the condition of verification of receipt of recurring membership fees from the registered member by the membership fee collection system, there is output a supply instruction signal that instructs the registered member to be supplied with the supported product by the product supplier through the selected designated retail outlet associated with the registered member in the assignment information.

The invention in a third aspect thereof relates to a computer program suitable for use in the sales system according to the second aspect of the invention described hereinabove, and is characterized in that in a program for installation on a computer in a supported product sales system, wherein a server device for use by a product supplier supplying a supported product that requires ongoing support, and a plurality of member client devices used by new members who are supplied with the supported product, are connected by communications network means, and comprising a database for storing retail outlet information relating to a plurality of designated retail outlets that can serve as outlets for supplying the supported product to the new member, member information relating to registered members previously registered, and assignment information that associates each of all registered members with a certain selected designated retail outlet among the plurality of designated retail outlets, the computer program for use in a supported product sales system (n) in response to a member registration application signal sent from a the member client device to the server device through the communications network means, transmits the retail outlet information pre-registered in the database from the server device through the communications network means to the member client device; (o) in response to retail outlet designating information created when the new member selects any of the designated retail outlets based on the retail outlet information, the designating information being transmitted from the member client device through the communications network means to the server device, generates assignment information that assigns the new member to a selected designated retail outlet and stores the information in the database, as well as registering information relating to the new member as a registered member in member information in the database, and executing a series of processes for registering the new registered member as being subject to collection of a membership fee on a recurring membership fee collection system; and (p) in response to input of a request signal from the new registered member, and on the condition of verification of receipt of recurring membership fees from the registered member by the membership fee collection system, executing a process for outputting a supply instruction signal that instructs the registered member to be supplied with the supported product by the product supplier through the selected designated retail outlet associated with the registered member in the assignment information.

The present invention in a fourth aspect thereof relates to a server device for use in a sales system employed in working the supported product sales method according to the first aspect of the invention described hereinabove, the server device used by a product supplier supplying a supported product, in order to sell a supported product that requires ongoing support, and is characterized by comprising a database for storing retail outlet information relating to a plurality of designated retail outlets that can serve as outlets for supplying the supported product to the new member, member information relating to registered members previously registered, and assignment information that associates each of all registered members with a certain selected designated retail outlet among the plurality of designated retail outlets, wherein the supported product sales server device is connected through communications network means to a plurality of member client devices for use by new members who are to be provided with the supported product; in response to a member registration application signal sent from a the member client device through the communications network means, transmits the retail outlet information pre-registered in the database from the server device through the communications network means to the member client device; in response to retail outlet designating information created when the new member selects any of the designated retail outlets based on the retail outlet information, the designating information being transmitted from the member client device through the communications network means to the server device, generates assignment information that assigns the new member to a selected designated retail outlet and stores this information in the database, registers information relating to the new member as a registered member in member information in the database, and executes a series of processes registering the new registered member as being subject to collection of a membership fee on a recurring membership fee collection system; in response to input of a request signal from the new registered member, and on the condition of verification of receipt of recurring membership fees from the registered member by the membership fee collection system, outputs a supply instruction signal that instructs the registered member to be supplied with the supported product by the product supplier through the selected designated retail outlet associated with the registered member in the assignment information.

In preferred practice the server device according to this aspect will be designed such that a member registration application image instructing entry of data that needs to be included in the member registration application signal is displayed on the member client device, so that input data written into the member registration application image through input by the new member on the member client device is sent in the form of a member registration application signal. With this arrangement, data required for member registration application can be input easily, data input leakage can be prevented, and the ease of the new member registration application process improved.

The present invention in a fifth aspect thereof relates to a member client device for use in a sales system employed in working the supported product sales method according to the first aspect of the invention described hereinabove, the client device being used by a new member who is to be provided with a supported product requiring ongoing support, and is characterized by (q) being connected through communications network means to a server device for use by a product supplier who supplies the supported product, for sending a member registration application signal to the server device through the communications network means; (r) in response to the member registration application signal, receiving from the server device retail outlet information relating to a plurality of designated retail outlets, and transmitting to the server device retail outlet designating information designating one of the plurality of designated retail outlets to serve as supply output of the supported product to the new member; (s) registering the new member in a database provided to the server device, as a registered member associated with the selected designated retail outlet, as well as registering the new registered member as being subject to collection of a membership fee in a recurring membership fee collection system; whereby the registered member, on the condition of payment of the recurring membership fees, is supplied with the supported product by the product supplier, through the selected designated retail outlet.

The member client device according to this aspect will preferably be designed such that a unique password individually assigned to the registered member and a disclosure request signal for stored information in the database are sent to the server device through the communications network means, in order that certain information preauthorized for disclosure contained in stored information in the database, including information about past supply of the supported product registered in the database, is received for display from the server device, on the condition of matching the password. By employing this arrangement, a registered user may utilize the data system a database for his or her own personal information, if needed.

The present invention in a sixth aspect thereof relates to a retail outlet client device for use by an designated retail outlet, suitable for use in a sales system employed in working the supported product sales method according to the first aspect of the invention described hereinabove. Specifically, this aspect features a retail outlet client device utilized by an designated retail outlet in a system wherein data is transferred through a communications network means between a member client device for use by a new member who is to be supplied with the supported product and a server device for use by a product supplier supplying the supported product, whereby information of the new member, together with assignment information associating the new member with a selected designated retail outlet, is stored in a database and the new member is registered as a new member, while also registering the new member in a recurring membership fee collection system as being subject to collection of a membership fee; for use when, in response to a request from the new member and on the condition of verification of payment of the recurring membership fees by the membership fee collection system, the product supplier supplies the supported product to the new member on an ongoing basis through the selected designated retail outlet associated with registered member in the assignment information; wherein the retail outlet client device is connected to the server device through a communications network means, whereby by sending to the server through the communications network means a unique password individually assigned to the designated retail outlet and a disclosure request signal for stored information in the database, certain information preauthorized for disclosure contained in stored information in the database, including information about the registered member associated with the designated retail outlet, is received for display from the server device, on the condition of matching the password.

That is, while an designated retail outlet need not necessarily exchange information with a server device or product supplier through a communications network means such as the Internet, and may instead exchange information via fax communications, postal communications, or the like, for example, by employing a retail outlet client device having a structure according to the aspect described hereinabove, it is possible to exchange only required information in a simple and rapid manner, whereby it is possible, for example, to quickly verify information for a registered member visiting the store, thereby not only providing an advantage to the retail outlet per se, but also improving the quality of service provided to registered 'members, and hence to the quality of the sales system as a whole.

The present invention in a seventh aspect thereof relates to a computer-accessible database suitable for use in a sales system employed in working the supported product sales method according to the first aspect of the invention described hereinabove. Specifically, this aspect features a database accessible by a server device that is employed by a product supplier who supplies a supported product requiring ongoing support, wherein the database (t) contains a member registration file that registers member information relating to a registered member who is supplied with the supported product, and a retail outlet registration file that registers retail outlet information relating to a plurality, of designated retail outlets that can act as supply points for the supported product; and has stored therein assignment information that associates all registered members registered in the member registration file with any selected designated retail outlet among the plurality of designated retail outlets registered in the retail outlet registration file; (u) can provide, to a member client device connected to the server device through communications network means for member registration application by a new member, retail outlet information relating to a plurality of designated retail outlets that can serve as supply points for the supported product; can receive from an external system payment information for recurring membership fees assessed on all of the registered members, store this membership fee payment in association with the registered 'members, and additionally store supply information for the supported product for the registered members in association with the registered members; (v) the database being used when the product supplier, on the condition of receipt of the recurring membership fees, supplies the supported product to the registered members through the selected designated retail outlets associated with the registered members.

By employing such a database in a computer system comprising a server device and member client devices connected via communications network means, and further comprising appropriately added retail outlet client devices, various kinds of information relating to a large number of registered users and/or new users can be efficiently maintained, administered, and utilized, whereby registered member/designated retail outlet convenience and received service may be improved, and the load on the server device reduced. The database in the present invention is not limited the narrow definition of database as one constituted independently of computer applications, and utilized' by these applications through a database management system (DBMS); database herein should be understood to include also information managed directly by computer applications in the form of files accessible thereby. Where a database according to the aforementioned narrow definition is employed, a hierarchical structure, network structure, or the like can be employed as the data structure format; however, a database designed with a relational data structure, in which data for registered members and designated retail outlets is represented in relational form, is advantageously employed, and will afford simpler data structure and improved convenient data access or usefulness.

The present invention in an eighth aspect thereof relates to a computer program suitable for installation on a member client employed when working the supported product sales method according to the first aspect of the invention described hereinabove. Specifically, this aspect features a computer program loaded by a member client device for use by a new member who will be supplied with a supported product requiring ongoing support, when a database administered by a server device for use by a product supplier who supplies the supported product has stored thereon information about registered members to be supplied with the supported product, information about a plurality of designated retail outlets that can act as points for supplying the supported product to the registered members, and assignment information that associates all of registered members separately with any selected designated retail outlet among the plurality of designated retail outlets; and on the condition of payment of a recurring membership fee by a the registered member, in response to a request from the registered member, the product supplier supplies the supported product on an ongoing basis to the registered member through the selected designated retail outlet associated with the registered member; wherein the computer program connects the member client device to the server device through communications network means; displays on the member client device a new member registration form, prompts the new member to input information about the new member into the member client device, and transmits the input new member information to the server device through the communications network means; displays on the member client device retail outlet information relating to retail outlets serving as supply points of the supported product to the new member, prompting the new member to input into the client device retail outlet designating information designating a the selected designated retail outlet; and transmits the input retail outlet designating information to the server device through the communications network means.

By using such a computer program on a member client device, a series of processes, from initial access to a server device by a new member up through the registration process, may be performed simply and easily. The program may, for example, be provided as a signal sent to the member client device from the server device through the communications network means in response to a request signal sent from the member client device to the server device; or provided on a computer-readable storage medium, for example, a magnetic recording medium or optical recording medium, having the program stored thereon, the medium being sent by mail, courier, transferred directly at an designated retail outlet etc., or otherwise provided by the product supplier or the like to a new member or registered member.

### BRIEF DESCRIPTION OF THE DRAWINGS

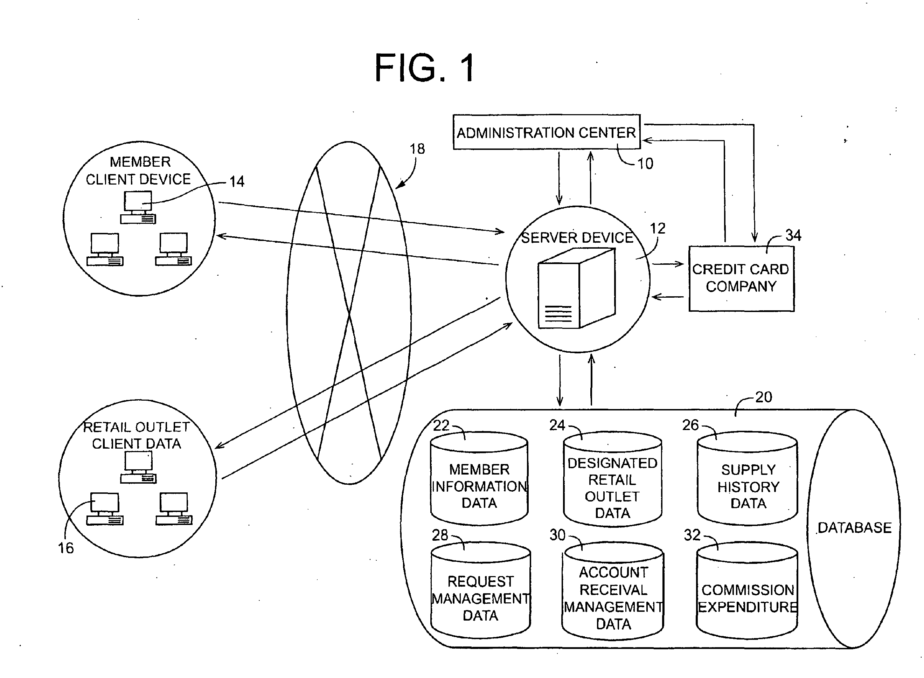

Fig. 1 is a schematic illustration of an embodiment of hardware design for working a contact lens sales method according to the invention.

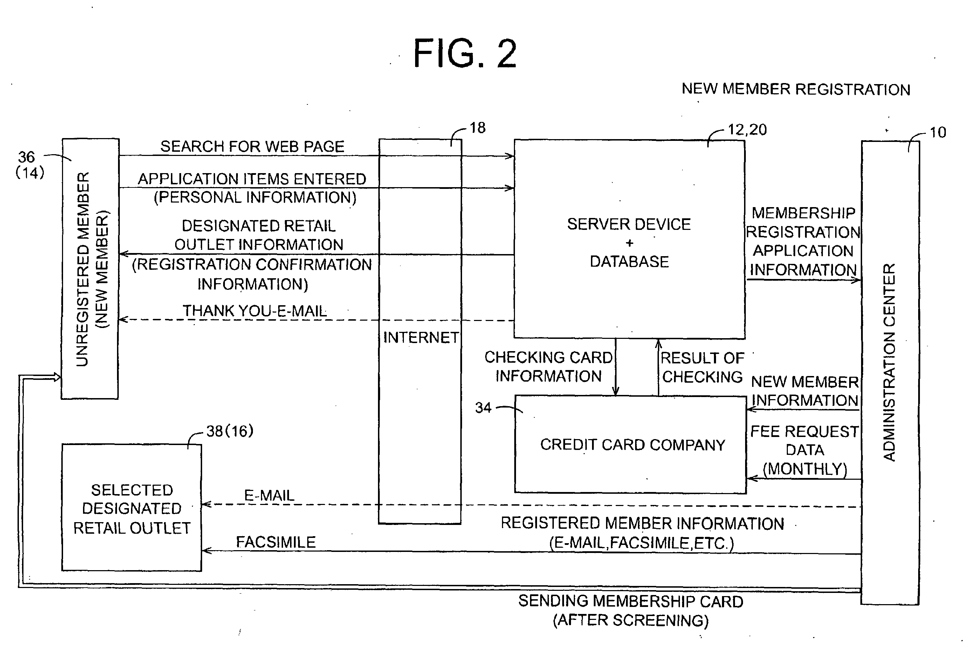

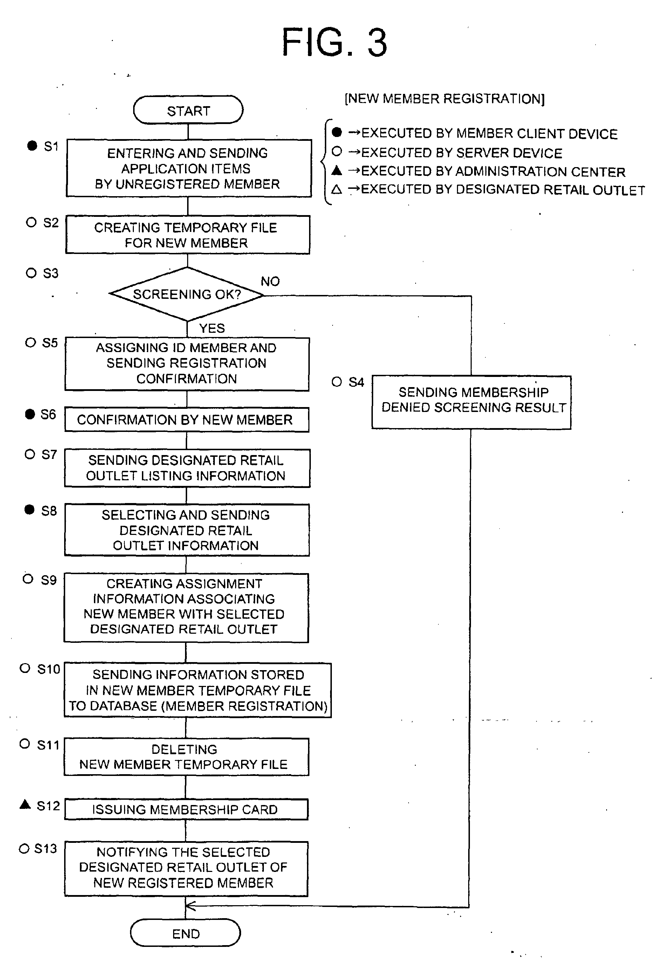

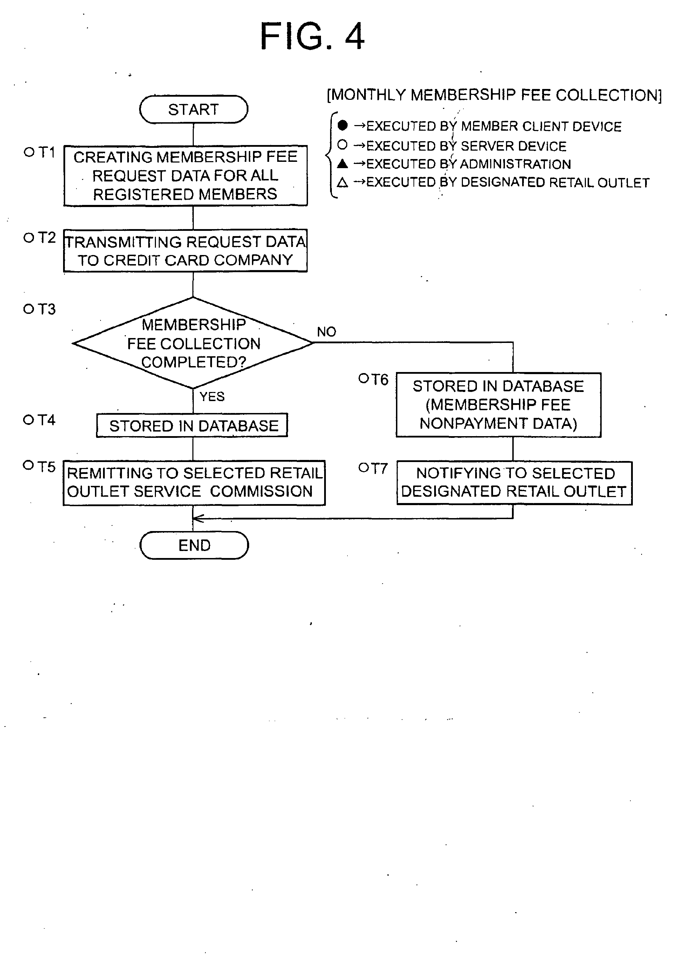

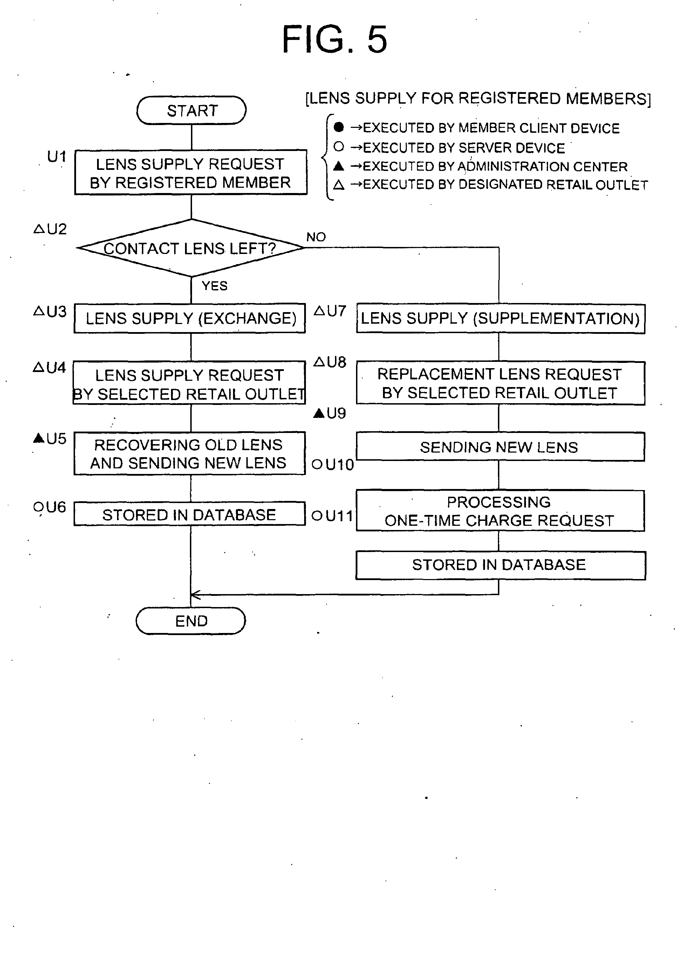

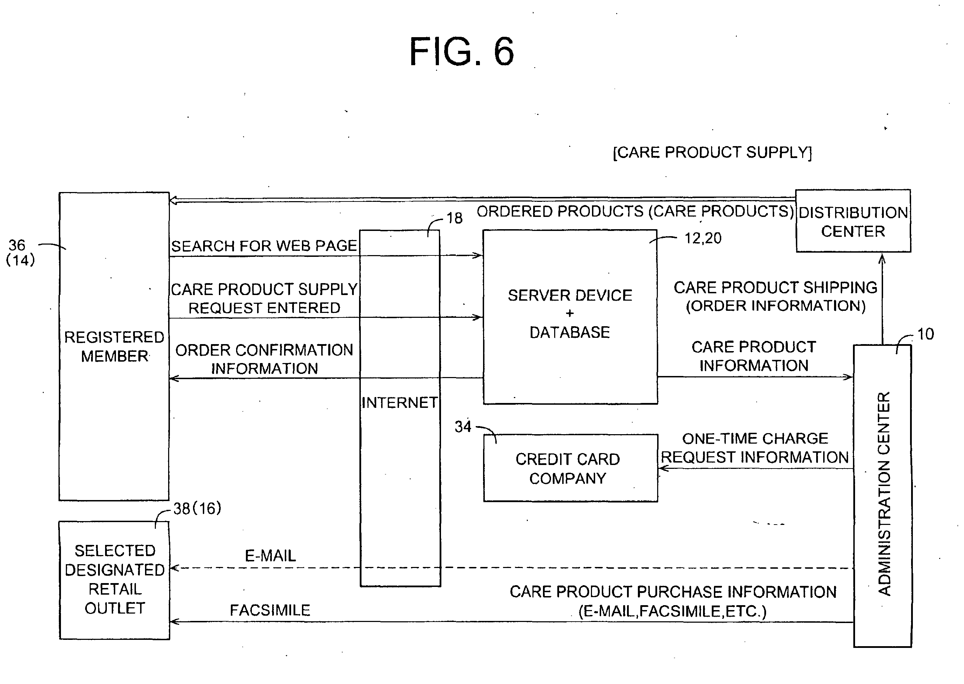

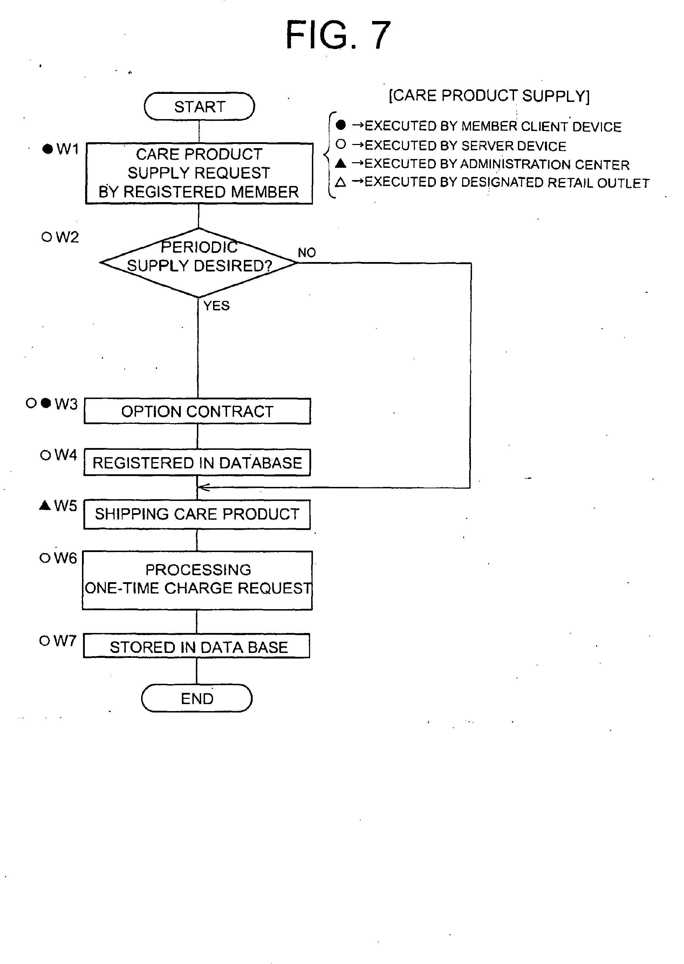

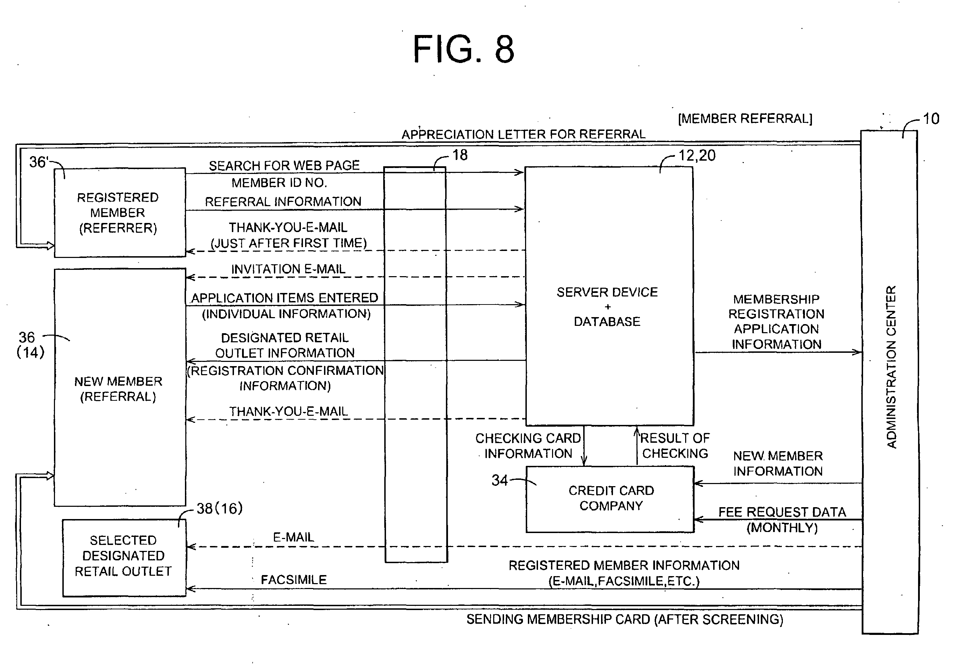

Fig. 2 is a block diagram describing a process for registering a new member when working a sales method according to the invention using the system illustrated in Fig. 1. Fig. 3 is a flow chart showing a processing routine relating to the new member registration shown in Fig. 2. Fig. 4 is a flow chart showing a processing routine relating to collection of a membership fee from a registered member when working a sales method according to the invention using the system illustrated in Fig. 1. Fig. 5 is a flow chart showing a processing routine relating to providing contact lenses to a registered member when working a sales method according to the invention using the system illustrated in Fig. 1. Fig. 6 is a block diagram describing a process for supplying personal care articles to a registered member when working a sales method according to the invention using the system illustrated in Fig. 1. Fig. 7 is a flow chart showing a processing routine relating to supply of personal care articles to a registered member, shown in Fig. 6. Fig. 8 is a schematic illustration of an embodiment of hardware design for working a contact lens sales method employing a system of new member referral by registered members.

### BEST MODE FOR CARRYING OUT THE INVENTION

A fuller understanding of the invention is provided through the following detailed description of the embodiments, made with reference to the accompanying drawings.

Fig. 1 is a schematic illustration showing an embodiment of a contact lens sales system according to the invention suitable for carrying out a supported product sales method of the invention in the case of contact lenses, focusing sending and receiving of information. The sales system of this embodiment is arranged as a computer system composed of (a) a server device 12 for use by and administered by a product supplier in the form of an administration center 10; (b) a member client device 14 for use by a new member or registered member; and (c) a retail outlet client device 16 for use by an designated retail outlet which are interconnected by communications network means in the form of an Internet 18, using the World Wide Web.

To enable sending and receiving of information via the Internet, the server device 12, the member client device 14, and the retail outlet client device 16 are composed of computers equipped with input devices, e.g., a keyboard, a mouse, etc.; and a display device, e.g. CRT, liquid crystal display, etc. In particular, the server device 12 is set up as a WWW server for providing Web pages over the Internet, and the member client device 14. and the retail outlet client device 16 have a WWW browser installed to enable them to view Web pages over the Internet. On the server device 12, the member client device 14, and the retail outlet client device 16 is installed a supported product sales system program constituting a sales system according to the invention, described hereinbelow, for processing contact lens sales according to the invention. Also, appropriate software that in cooperation with the program enables individual sending and receiving of information of various kinds over the Internet using e-mail or other means, for processing contact lens sales. Optionally, software for encoding and decoding sent and received signals may be installed as well.

The server device 12 is basically constituted as a single unit, whereas large numbers of member client devices 14 and retail outlet client devices 16 are set up. The member client devices 14 in particular are appropriately constituted as personal computers, mobile terminal computers, cell phones, PHS or other devices capable of connecting to a communications network, i.e., the Internet 18, to access Web pages disclosed on the Internet 18. The retail 'outlet client devices 16 are provided only to qualified designated retail outlets whose, ability to provide a certain consistent ongoing service to members has been verified, on the condition of a certain contractual agreement with the product supplier. The number of the retail outlet client devices is determined in advance with reference to population rates or the like, so that retail outlets are dispersed at appropriate distances apart throughout the entire service area.

The sales system of this embodiment further comprises a database 20 administered by server device 12. The server device 12 and the database 20 make up a database system the includes an appropriate schema.

The database 20 contains member information data 22, designated retail outlet data 24, supply history data 26, request management data 28, accounts receivable management data 30, and commission expenditure management data 32. The member information data 22 consists of stored individual information for registered members in the sales system, and stores, for example, registered member name, address, date of birth, age, sex, phone number, occupation, employer/school, credit card number, credit card expiration date, member ID code, reason for joining or other survey information, e-mail address, desired selection criteria for designated retail outlet, and other data. The designated retail outlet data 24 stores individual information for designated retail outlets in the sales system, and stores, for example, designated retail outlet name, address, designated retail outlet registration date, number of employees, telephone number, retail outlet ID code, affiliated member information, number of affiliated registered members, other survey information, e-mail address, and other data. The supply history data 26 stores information (past supply information) for contact lenses supplied according to the sales system, and stores; for example, registered member-provided contact lens type, product name, specifications (base curve, power, diameter), corrected vision with the supplied contact lenses, uncorrected vision, supply date, supply outlet (designated retail outlet), and other such data. The request management data 28 stores periodic request information for membership fees assessed on all registered members, one-time request information, periodic and one-time request history, and other such data. Accounts receivable management data 30 stores account balance information for membership fees assessed on all registered members, one-time receivables information, periodic and one-time receivables history, and other such data. The commission expenditure management data 32 stores information relating to service management commissions paid by the product supplier to designated retail outlets for acting as service outlets to provide a supplied product to registered members, such as amount of payment, payee, payment method, payment date, and payment history for each designated retail outlet, and other such data.

The sales system of this embodiment comprises as one element a credit card company 34, incorporated into the system. The credit card company 34 can utilize an existing company different from the product supplier. The credit company 34 basically contracts on an individual basis with registered members, for example, paying a certain amount, set on the basis of the contract, periodically to the product supplier (administration center 10) at predetermined intervals, and charging the registered member's account for an amount corresponding to the paid amount. By incorporating a credit card company 34 into the sales system in this way, the labor required on the part of the product supplier (administration center 10) to screen new members during registration or when collecting membership fees etc. can be reduced.

In a sales system constituted in the above manner, as a general rule, support such as supply at no additional cost or sales of lens care products and the like is conducted exclusively with registered members. That is, the sales system of the present embodiment is basically limited to targeting registered members.

Accordingly, the discussion now turns to the process by which an unregistered new member applies for membership to become accepted as a registered member. The entire process is shown in the block diagram in Fig. 2, and the process flow in the flow chart in Fig. 3. In this embodiment, a new member, as a general rule, is presumed to be a current user of contact lenses purchased from the product supplier, but this may be expanded to include individuals who have purchased contact lenses from the product supplier within a predetermined period of time, but are not currently using them; or to include individuals who are not currently using contact lenses purchased from the product supplier, by assessing as needed a special condition such as payment of a predetermined additional charge, commitment to a contract for a predetermined period of time, or prepayment of membership fees for a predetermined period.

First, the unregistered new member 36 connects to the Internet 18 using the client device 14, e.g., a personal computer or cell phone, and in Step: S1 searches for and accesses a Web page provided on the Internet 18 by the server device 12, displays on the screen a form consisting of membership registration application image provided on the page, and after entering application items (personal information) required for membership application, sends via the Internet 18 the entered data by e-mail to the server device 12 in the form of a member registration application signal. As application items, the applicant enters, for example, unregistered member 36 name, address, date of birth, age, sex, phone number, occupation, employer/school; credit card issuer, number, and expiration date; reason for wishing to become a registered member, survey information, e-mail address, desired criteria for selecting an designated retail outlet as a point of service, for example, close to home, close to work, close to certain mass transit, or the like. An e-mail address may be entered as one of the application items; or the server device 12 receiving the application items by e-mail may register automatically.

In Step: S2, the server device 12, having received the membership registration application signal which includes the above application items, creates on the computer a temporary file for the new member. After storing application items, etc. received from the new member 36 in this file, a new member screening process is executed in Step S3 to determine, on the basis of information contained in the received application items, whether the new member 36 who has applied to register meets certain predetermined screening conditions. This determination is made by checking whether certain minimum required application items have been sent, as well as the authenticity of credit card information, validity of the credit card, and, optionally, any past registered member history of the new member 36. As regards credit card-related items, the system relies on the credit card company 34, sending the data from the server device 12 to the credit card company 34 using a dedicated line. If, as a result of screening, there is found to be a problem serious enough that membership is denied, in Step: S4, the membership denied screening result is sent as result information, together with the reason for the decision, to the member client device 36 by the server device 12, whereupon the temporary new member file created by server device 12 is deleted, and the process is terminated. In such instances as well, data stored in the temporary file created for the new member may, together with the screening results, be stored in database 20.

If the screening results show no problem, in subsequent Step S5, the server device 12 assigns an ID number for identifying new member 36, and stored in the temporary new member file in the. server device 12 registration confirmation information including result information, together with the ID number. This registration information including the information received by server device 12 from new member 36 in Step: S1. This information is also sent to member client device 14, for confirmation by the new member 36 in Step S6. After the registration confirmation information has been confirmed by the new member 36, if there are no problems, a message to this effect may be sent from the client device 14 to server device 12.

In Step S7, the server device 12 sends to the member client device 14 designated retail outlet listing information as retail outlet information for selecting an designated retail outlet. This designated retail outlet listing information preferably contains information for only a few designated retail outlets selected on the basis of the desired criteria for selecting an designated retail outlet sent by the new member 36 in Step: S1. In the subsequent Step: S8, the new member 36 selects only one designated retail outlet for receiving supply service of contact lenses or the like, on the basis of the designated retail outlet listing information provided as retail outlet information by server device 12; and then sends this information to server device 12 as retail outlet designating information. The designated retail outlet selection process of Steps: S7 -S8 may be executed together with the registration information verification process of Steps: S5 -S6.

In Step: S9, server device 12, on the basis of the received retail outlet designating information, creates assignment information that associates the new member 36 with the selected designated retail outlet, and stores this in the new member temporary file. In Step: S10, information that has been stored in the new member temporary file is now sent to database 20 and registered as stored data, to complete registration of new member 36 as a registered member. Next, in Step: S11, server device 12 deletes the new member temporary file, and in Step: S12, the administration center 10 issues a membership card, which is sent to the new member 36 by mail or the like. The administration center 10 contacts the credit card company 34 through the dedicated line with necessary information for new member 36 newly added to the registered member base, and in Step: S 13 notifies to contacts the selected specific designated retail outlet by e-mail, fax, or other means. This concludes the process of registering a new member 36 as a registered member, i.e., the process of registration as being subject to collection of the membership fee. After screening in Step: S4, the new member 36 may be sent a registration thank you notice thanking him or her by e-mail or other means, for example, during reply to registration confirmation information in Step: S5, or after registration in the database in Step: S10 has been completed.

The registered member 36 registered in the above manner now has the obligation to pay the monthly membership fee to the supplier of the product (i.e. contact lenses), and, as a general rule, to be supplied with contact lenses at no additional cost.

The routine of the collection process of the membership fee from registered members 36 is shown in a flowchart of Fig. 4. First, every month on a predetermined date, server device 12, in Step: T1 creates membership fee request data (request forms) for all registered members registered in database 20, and in Step: T2 requests the credit card company 34 for collection of membership fees by transmitting the request data to the credit card company 34.

It then receives from the credit card company 34 membership fee collection result information relating to each registered member, and in Step: T3, on the basis of this information, determines whether membership fee collection has been completed for each registered member; in the event that membership fee payment has not been carried out by a registered member, the system proceeds to Step: T6 wherein membership fee nonpayment data associated with the registered member who has not paid the membership fee relating to the registered member is stored in the database 20, and in Step: T7, the selected designated retail outlet 38 associated with the registered member is notified of this fact, whereupon the process terminates. A registered member who has failed to pay the membership fee may, for example, be issued a membership fee nonpayment warning, and if not paid within a certain time interval, a process to carry out cancellation of registration or other process performed. Information regarding a nonpaying registered member, such as nonpayment of membership fees, registration cancellation, or the like, may be provided in the event of a subsequent enquiry from another designated retail outlet.

As will be apparent from the above, in the present embodiment, the recurring membership fee collection system is constituted by a system that executes the membership fee collection process shown in Fig. 4, i.e., that includes a credit card company 34.

On the other hand, for a registered member whose payment of membership fees is verified in Step: T3, the system proceeds to Step: T4, wherein receipt of membership fee information for the month in question is stored in database 20, and then to Step: T5 wherein it is performed a process to remit to the selected designated retail outlet 38 a monthly service commission consisting of a predetermined sum of money for each registered member assigned thereto. This completes the monthly membership fee collection process from all registered members.

A processing routine during providing of contact lenses to the registered member 36 is shown in the flow chart in Fig. 5.

First, in Step: U1, a request to be supplied with contact lenses is made by registered member 36. This request is made directly to the selected designated retail outlet 38 to which the registered member 36 is assigned. It is acceptable to permit a request for supply to be executed by server device 12 by e-mail or the like from a member client device 36; where a request by means of a request signal from a registered member 36 is performed by the server device 12 in this way, the server device 12 will notify the selected designated retail outlet 38 to this effect by outputting to it a supply instruction signal, to instruct the vendor to supply the registered member 36 with contact lenses when he or she visits the outlet, while also contacting the registered member 36 to pick up the contact lenses at the selected designated retail outlet. In particular, where a request for supply of contact lenses to server device 12 is, for example, for a special contact lens not normally stocked by a selected designated retail outlet, it is possible for the administration center 10, on the basis of the request to server device 12, to send the special contact lens to the selected designated retail outlet while informing the registered member 36, via the server device 12, of the date on which the lenses can be picked up at the selected designated retail outlet 38, or for some other process leading to improved service to the registered member 36 to be performed.

The request for supply of contact lenses in the aforementioned Step: U1 presumes that the request is made by a registered member 36 who has paid the monthly membership fee on time; when there is a request from a registered member 36 to a selected designated retail outlet, the latest information regarding membership fee payment status of the registered member 36 etc. can be verified by e-mail, telephone, or other means.

If the request for supply of contact lenses in Step: U1 has been made in the proper manner, in subsequent Step: U2, the selected designated retail outlet 38 checks whether any of the contact lenses used to date are left. As regards supply of contact lenses, as a general rule of this sales system, new contact lenses are supplied regardless of the circumstances of the registered member 36, so for the purpose of preventing abuse of the system, where half or more of the remaining contact lenses cannot be exchanged, verification that contact lenses used are left will be necessary for the purpose of a process such as assessing the registered member 36 a certain additional payment.

Accordingly, verification in Step: U2 may be carried out by whether one-half or more of the contact lenses used to date, even broken pieces, are left, and more detailed investigation is not generally necessary. By so doing, it is possible to deal rapidly not only with contact lenses that are past the expiration date, but also with issues such as progressive deterioration in the vision adjustment ability of the registered member 36, lens damage due to improper lens handling, or the like, so as to improve convenience for the registered member.

If it has been confirmed that half or more of the remaining contact lenses are left, the system proceeds to Step: U3 wherein the selected designated retail outlet 38 supplies the registered member 36 with new contact lenses in exchange for the old contact lenses. Next, in Step: U4, the selected designated retail outlet 38 informs the administration center 12 that it has supplied the registered member 36 with new contact lenses, and requests the administration center 10 for delivery of a replacement of the supplied contact lenses. In response to this request, the administration center 10 in Step: U5 recovers the old contact lenses from the selected designated retail outlet 38, and sends new contact lenses as replacements to the selected designated retail outlet 38. The administration center 10 in this embodiment can include a distribution center that is part of the contact lens supplier. Then, in server device 12, the information associated with registered member 36 and selected designated retail outlet 38, i.e. recovery of the old contact lenses, supply of new contact lenses, details of the supplied contact lenses, supply date, and other such information is stored in database 20, and the process terminates.

On the other hand, if it is determined in Step: U2 that less than half of the contact lenses used by registered member 36 are left, the system proceeds to Step: U7 wherein selected designated retail outlet 38 supplies the registered member 36 with new contact lenses by way of replenishment or supplementation, rather than exchange. Then, in Step: U8, the selected designated retail outlet 38 informs the administration center 10 that it has supplied the registered member 36 with new contact lenses, and requests the administration center 10 for delivery of a replacement of the supplied contact lenses. In response to this request, the administration center 10 in Step: U9 supplies new contact lenses as replacements to the selected designated retail outlet 38, and in Step: U10 requests the credit card company 34 for a one-time charge to collect the aforementioned additional sum from the registered member 36. Then, in server device 12, the information associated with registered member 36 and selected designated retail outlet 3,8, i.e. supply of new contact lenses without recovery of old contact lenses, details of the supplied contact lenses, supply date, and other such information is stored in database 20, and the process terminates.

As regards care products, including contact lens storage solution, cleaning solution, treatment solution, and other expendable products, and contact lens storage cases, processing devices, and other contact lens-related goods, a registered member may receive supply thereof utilizing the sales system described hereinabove; the flow of information and the like in such a case is shown in the block diagram in Fig. 6, and the process routine thereof is shown in the flow chart in Fig. 7.

Specifically, first, in Step: W1, request for supply of a care product is made by registered member 36. This request can be made from a member client device 14 used by the registered member 36, to server device 12 through the Internet 18, for example, entering the required information in a special order page disclosed on the Internet 18, or using e-mail or other means. Having received the request, the server device 12, in Step: W2, transmits to the member client device 14 query information relating to the care product, as to whether periodic supply is desired, or only one-time supply is desired. Where the response to this query from registered member 36 is that periodic supply is desired, in Step: W3, an option contract targeting periodic supply of the care product is exchanged, and in Step: W4, information about the completed contract is registered in database 20. This option contract can be processes by exchange of information between server device 12 and the member client device 14 through the Internet 18.

In Step: W2, if registered member 36 desires periodic supply of the care product, after the option contract has been concluded in the manner described above, or immediately in the case that registered member 36 desires only one-time supply of the care product, in Step: W5, order information for the target care product is sent by server device 12 to administration center 10, and in response to this administration center 10 instructs a distribution center managed by the product supplier to supply the care product to registered member 36, for example, by courier or other distribution means. In the event that a registered member 36 so desires, supply of a care product may be carried out at a selected designated retail outlet 38, or carried out using as a receiving point an existing store designated by the registered member 36, such as a convenience store, post office, or the like. The distribution center may be constituted as part of the administration center 10 as described above, or care products may be handled by a company running a trucking business or warehousing business different from the contact lens supplier.

In Step: W5, the administration center 10 ships the requested care product to the registered member 36, and in Step: W6 requests the credit card company 34 for a one-time charge, and collects the cost of the care product from registered member' 36. Subsequently, in server device 12, the type and number of care products supplied to registered member 36, supply point, or other supply information is stored in database 20, and if necessary, care product supply information to the member 36 is sent to the selected designated retail outlet 38 to which the registered member 36 is assigned, by means of e-mail, fax, or the like, whereupon the process terminates.

In Step: W2, if registered member 36 desires periodic supply of the care product, in server device 12, request information relating to the care product which is the subject of the contract is subsequently created periodically (every 6 months, for example), and on the basis of this the supply process of the care product to registered member 36 from W5 to W7 described hereinabove is repeated automatically unless cancelled by the registered member 36.

Accordingly, the contact lens and care product sales system according to the present invention as described hereinabove, makes it possible by using a computer system that includes the Internet 18, to constitute a sales system including a new member registration process without imposing an excessive burden on the registered member 36 and selected designated retail outlets 38, and without requiring a large staffing burden at the administration center 10. Thus, contact lens supply operations utilizing the sales system can be carried out efficiently; and benefits that include contact lens guaranteed service can be provided to registered members 36, so ongoing support to registered members 36 for extended periods can be realized easily.

According to this kind of sales system, large amounts of data including for each registered member 36 contact lens frequency and compatibility, supported product supply history information, and the like, is placed automatically in database 20 without any special process being required, and continuously held and accumulated therein for long periods as historical data, whereby important data that can be used as reference by registered members, selected designated retail outlets, or optionally by eye doctors, can be obtained easily. When supplying this data, it is preferable to consider protecting individual data, for example, setting disclosure permission so as to exclude data disclosure of which could give rise to serious problems, and supplying only disclosure-permitted data; or assigning a password to each registered member, and supplying data on the condition that the password matches, in order to prevent the information from being supplied to other persons. The password may be selected arbitrarily by the new member 36 during member registration, and stored in server device 12; or the ID number made confidential, and the ID number used as the password.

While the present invention has been described in detail in terms of certain preferred embodiments, these are merely illustrative. The invention should not be construed as being limited to the specific disclosure in the embodiment described hereinabove.

For example, to facilitate and promote use of the sales system by unregistered members who are not familiar with it, the system could incorporate an additional registered member referral system. A concrete example of such a system is shown in Fig. 8 in terms of data flow. Specifically, in the system illustrated in Fig. 8, as will be apparent from comparison with the above-described embodiment shown in Fig. 2, instead of a search for the Web page by the unregistered new member 36 per se prior to registration, an invitation e-mail is sent from server device 12 directed to a client device connectable to the Internet used by the new member 36, whereupon the new member 36, having entered the required items in an application form attached to the invitation e-mail, sends e-mail back to server device 12, to execute sending of application information.

Sending of invitation e-mail to the unregistered new member 36 is accomplished by means of referral from a previously registered member 36'. Specifically, first, registered member 36' accesses a referral page of a Web page provided over the Internet 18, enters required referral information, and sends it to the server to initiate the process. Required referral information could include the name, age, and e-mail address of the new member being referred (unregistered member), as well as text directed to the administration center or new member being referred.

Once the member application process between the new member 36 and server 12 is initiated by means of referral from registered member 36', subsequently, processing is carried out in the same manner as the new member registration process described hereinabove in Figs. 2 and 3, to register as a new member. Server device 12, when a registration' invitation e-mail has been sent to new member 36, or when registration of new member 36 as a member has been completed, will preferably send to the referring registered member 36' a thank-you e-mail, or send a trinket or letter of appreciation for the referral. Alternatively, referring registered members may be awarded a predetermined number of points each time that they refer a new registered member, and provided with complementary goods festooned with animated characters, care products, or the like.

In the preceding embodiment, a credit card company independent from the contact lens supplier is used to collect membership fees and one-time fees from registered members, but collection of fees could instead be carried out by the administration center or the like.

As one of the services provided to registered members, information relating to contact lenses and the like could be periodically or at irregular intervals sent by e-mail etc. from the server device 12 to member client devices 14; or services such as period eye exams could be performed at selected designated retail outlets, and the results stored in the database 20, so that registered members 36 could access the information through the Internet, which is useful in knowing the condition of one's own vision, and taking care of it.

Registered members may be provided access to exclusive consultation, in person or by e-mail, at a selected designated retail outlet 38 or administration center 10, whereby further enhanced service and more complete management information may be achieved.

As one of the services provided to registered members, referral information for an eye doctor suitable for the registered member may be provided; in response to a request from a registered member, the location of the eye doctor's office, days closed, exam hours, telephone number, etc. could be provided by e-mail or the like; or an eye doctor designated by the registered member could be provided directly, or through the registered member, with ophthalmology related information such as contact lenses, vision, etc. of the registered member, which has been stored in the database of the sales system.

Various other modifications, adjustments, and improvements to the invention will be apparent to the practitioner of art, which embodiments shall be included within the scope of the invention insofar as they do not depart from the spirit thereof.

### INDUSTRIAL APPLICABILITY

As is apparent from the preceding description, according to the present invention, products requiring support due to the need for specialized knowledge in selection such as contact lenses can now, when being provided to a customer, be processed by a computer system that includes communications network means to efficiently collect and accumulate personal information over an extended periods, on the basis of which information, a higher level of specialized support may be provided to customers who are registered members.

## Claims

1. A sales method for a supported product requiring ongoing support, **characterized in that**:
in response to a member registration application signal sent from a member client device provided for the use of a new member to be supplied with said supported product, through communications network means, to a server device provided for the use of a product supplier who will supply said supported product,
retail outlet information relating to a plurality of designated retail outlets pre-registered in a database is transmitted from said server device through said communications network means to said member client device;
in response to retail outlet designating information created when said new member selects any of said designated retail outlets based on said retail outlet information, and transmitted from said member client device through said communications network means to said server device;
information for said new member, together with assignment information that assigns said new member to a selected designated retail outlet, is stored in said database, and said new member is registered as a member;
said new member is registered in a recurring membership fee assessment system as being subject to assessment of membership fee; and
on a condition of verification of recurring receipt of membership fees by said membership fee assessment system, in response to a request from a registered member who has been registered as said member, said product supplier supplies said supported product on an ongoing basis to said registered member, through said selected designated retail outlet associated with said registered member in said assignment information.

2. A sales method for a supported product according to claim 1, wherein said product supplier provides said registered member with a service in a form of replacement of said supported product at no additional cost on a condition of recurring receipt of said membership fees.

3. A sales method for a supported product according to claim 1 or 2, wherein said product supplier provide said registered member with a service in a form of replenishment or supplementation of said supported product on a condition of payment of a temporary supplemental fee in addition to recurring receipt of said membership fees.

4. A sales method for a supported product according to any one of claims 1-3, wherein said product supplier supplies said supported product on a one-time basis from a designated retail outlet other than said selected designated retail outlet assigned to said registered member, on a condition of recurring receipt on a condition of recurring receipt of said membership fees by said registered member and in response to a request from said registered member.

5. A sales method for a supported product according to any one of claims 1-4, wherein in response to a supply of said supported product to said registered member, supported product supply information for said registered member is stored in said database.

6. A sales method for a supported product according to any one of claims 1-5, wherein said supported product comprises contact lenses.

7. A sales method for a supported product according to any one of claims 1-6, wherein in response to a member registration application signal sent by said new member from said member client device to said server device, new member screening is conducted to determine whether said new member meets predetermined screening requirements based on information contained in said member registration application signal, and information for said new member is stored in said database to register said new member as a member, on condition that said screening requirements are met.

8. A sales method for a supported product according to claim 7, wherein information resulting from said new member screening is sent to said new member.

9. A sales method for a supported product according to any one of claims 1-8, wherein verification of recurring receipt of said membership fees from said registered member is carried out on a periodic and/or as-needed basis, and if recurring receipt of said membership fees is not verified, membership fee nonpayment data is stored in said database in association with said registered member.

10. A sales method for a supported product according to any one of claims 1-9, wherein in response to a request from said designated member, information pre-designated as disclosable among said information relating to said registered member stored in said database, is made accessible by displaying said information on said member client device by transmitting said information from said server device to said member client device, only on a condition of a match of identifying data for said registered member.

11. A sales method for a supported product according to any one of claims 1-10, wherein said product supplier supplies directly and/or through said selected designated retail outlet information relating to said supported product to said registered member on a periodic and/or one-time basis, on a condition of recurring receipt of said membership fees.

12. A sales method for a supported product according to any one of claims 1-11, wherein said product supplier supplies directly and/or through said selected designated retail outlet supply a related product in concerned with said supported product to said registered member on a periodic and/or one-time basis in response to a request from said registered member, on a condition of payment of a temporary price for said product in addition to recurring receipt of said membership fees.

13. A sales method for a supported product according to any one of claims 1-12, wherein said product supplier supplies directly and/or through said selected designated retail outlet supply a consumable product needed for said supported product to said registered member on a periodic basis, on a condition of recurring receipt of said membership fees.

14. A sales method for a supported product according to claim 12 or 13, wherein said product 'supplier supplies directly said related product or said consumable product to' said registered member by utilizing an existing store such as a convenience store and a post office, other than said designated retail outlet as a receipt counter, in accordance with a designation made by said registered member.

15. A sales method for a supported product according to any one of claims 1-14, wherein information pre-designated as disclosable among information stored in said database is sent on a periodic basis and/or on a one-time basis in response to a request from said designated retail outlet, from said server or said product supplier to a designated retail outlet pre-registered in said database.

16. A sales method for a supported product according to any one of claims 1-15, wherein a retail outlet client device for use by said designated retail outlet is connected to said server device through said communication network means, and said designated retail outlet requests to and is received from said server device information pre-designated as disclosable among various information stored in said database, on a periodic basis and/or on a one-time basis in response to a request.

17. A sales method for a supported product according to any one of claims 1-16, wherein a credit card company different from said product supplier is utilized by way of a membership fee collection system, and a receipt of membership fee is verified through said credit card company.

18. A sales method for a supported product according to any one of claims 1-17, wherein said designated retail outlet stored in said database is paid by said product supplier a service fee commensurate with a number of registered members associated with said individual designated retail outlet.

19. A sales method for a supported product according to any one of claims 1-18, wherein in response to a new member referral signal sent to said server device for use by said product supplier, through communications network means by a referrer using said member client device for use by said referrer, said server device sends to said referred new member said retail outlet information relating to a supported product and to application for membership through said communications network means, and when sending said retail outlet information and/or upon completion of member registration of said referred new member, said referrer who referred said new member is sent a thank you by said product supplier.

20. A sales method for a supported product according to claim 19, wherein said referrer is said registered member.

21. A sales method for a supported product according to any one of claims 1-20, wherein said communications network means comprises an Internet.

22. A sales system for selling a supported product requiring ongoing support, **characterized by** comprising:
a plurality of member client devices each being for use by a new member who is supplied with said supported product;
a server device for use by a product supplier supplying said supported product;
communications network means connecting said server device to said plurality of member client devices; and
a database for storing retail outlet information relating to a plurality of designated retail outlets that can serve as outlets for supplying said supported product to said new member, member information relating to registered members previously registered, and assignment information that associates each of all registered members with a certain selected designated retail outlet among said plurality of designated retail outlets,
wherein said supported product sales system is designed such that; in response to a member registration application signal sent from one of said plurality of member client devices to said server device through said communications network means, said retail outlet information pre-registered in said database is transmitted from said server device. through said communications network means to said one of said member client device; in response to retail outlet designating information created when said new member selects any of said designated retail outlets based on said retail outlet information, said designating information being transmitted from said one of said plurality of member client devices through said communications network means to said server device; assignment information that assigns said new member to a selected one of said designated retail outlets is generated and stored in said database; information relating to said one of said new members is registered as a registered member in member information in said database, and a series of processes registering said registered member as being subject to collection of a membership fee is executed on a recurring membership fee collection system; and in response to input of a request signal from said registered member, and on a condition of verification of receipt of recurring membership fees from said registered member by said membership fee collection system, there is output a supply instruction signal that instructs said registered member to be supplied with said supported product by said product supplier through said selected one of said designated retail outlets associated with said registered member in said assignment information.

23. A sales system according to claim 22, wherein it is realized by means of software installed on said server device a process that: in response to said member registration application signal sent from said one of said plurality of member client device to said server device through said communications network means, said retail outlet information pre-registered in said database is transmitted from said server device through said communications network means to said one of said plurality of member client devices; in response to said retail outlet designating information created when said one of said new member selects any of said designated retail outlets based on said retail outlet information, said designating information being transmitted from said member client device through said communications network means to said server device, assignment information that assigns said new member to a selected one of said designated retail outlets is generated and stored in said database; information relating to said new member is registered as a registered member in member information in said database, and a series of processes registering said one of said new registered members as being subject to collection of a membership fee is executed on a recurring membership fee collection system; and in response to input of a request signal from said one of said new registered members, and on the condition of verification of receipt of recurring membership fees from said registered member by said membership fee collection system, there is output a supply instruction signal that instructs said registered member to be supplied with said supported product by said product supplier through said selected one of said designated retail outlet associated with said registered member in said assignment information.

24. A computer program for use in a sales system for selling a supported product requiring ongoing support, and for installation on a computer constituting a supported product sales system that includes: a server device for use by a product supplier supplying a supported product that requires ongoing support; a plurality of member client devices each being for use by a new member who is supplied with said supported product, which are connected by communications network means with said server device; and a database for storing retail outlet information relating to a plurality of designated retail outlets that can serve as outlets for supplying said supported product to said new member, member information relating to registered members previously registered, and assignment information that associates each of all registered members with a certain selected designated retail outlet among said plurality of designated retail outlets, said computer program for use in said supported product sales system being **characterized in that**:
in response to a member registration application signal sent from one of said plurality of member client devices to said server device through said communications network means, said retail outlet information pre-registered in said database is transmitted from said server device through said communications network means to said member client device;
in response to retail outlet designating information created when said new member selects any of said designated retail outlets based on said retail outlet information, said designating information transmitted from said member client device through said communications network means to said server device, generates assignment information that assigns said new member to a selected designated retail outlet and stores said information in said database, and information relating to said new member is registered as a registered member in member information in said database, while a series of processes for registering said new registered member as being subject to collection of a membership fee is executed on a recurring membership fee collection system; and
in response to input of a request signal from said new registered member, and on the condition of verification of receipt of recurring membership fees from said registered member by said membership fee collection system, it is executed a process for outputting a supply instruction signal that instructs said registered member to be supplied with said supported product by said product supplier through said selected designated retail outlet associated with said registered member in said assignment information.

25. A server device for use by a product supplier supplying a supported product requiring ongoing support, in order to sell said supported product, said server device comprising:
a database for storing retail outlet information relating to a plurality of designated retail outlets that can serve as outlets for supplying said supported product to a new member, member information relating to registered members previously registered, and assignment information that associates each of all registered members with a certain selected designated retail outlet among said plurality of designated retail outlets, wherein said server device for use in selling said supported product is connected through communications network means to a plurality of member client devices each being for use by said new member who is to be provided with said supported product; in response to a member registration application signal sent from one of said plurality of said member client devices through said communications network means, said retail outlet information pre-registered in said database is transmitted from said server device through said communications network means to said one of said plurality of member client device; in response to retail outlet designating information created when said new member selects any of said designated retail outlets based on said retail outlet information, said designating information transmitted from said one of said plurality of member client device through said communications network means to said server device, generates assignment information that assigns said new member to a selected designated retail outlet and stores this information in said database, and information relating to said new member is registered as a registered member in member information in said database, while a series of processes registering said new registered member as being subject to collection of a membership fee on a recurring membership fee collection system; in response to input of a request signal from said new registered member, and on the condition of verification of receipt of recurring membership fees from said registered member by said membership fee collection system, it is outputted a supply instruction signal that instructs said registered member to be supplied with said supported product by said product supplier through said selected designated retail outlet associated with said registered member in said assignment information.

26. A server device according to claim 25, wherein said server device being designed such that a member registration application image instructing entry of data that needs to be included in the member registration application signal is displayed on the member client device, so that input data written into the member registration application image through input by said new member on said member client device is sent in the form of a member registration application signal.

27. A member client device for use by a new member who is to be provided with a supported product requiring ongoing support, **characterized. by**:
being connected through communications network means to a server device for use by a product supplier who supplies said supported product, for sending a member registration application signal to said server device through said communications network means;
in response to said member registration application signal, receiving from said server device retail outlet information relating to a plurality of designated retail outlets, and transmitting to said server device retail outlet designating information designating one of said plurality of designated retail outlets to serve as supply output of said supported product to said new member;
registering said new member in a database provided to said server device, as a registered member associated with said selected designated retail outlet, as well as registering said new registered member as being subject to collection of a membership fee in a recurring membership fee collection system; whereby said registered member, on the condition of payment of the recurring membership fees, is supplied with said supported product by said product supplier, through said selected designated retail outlet.

28. A member client device according to claim 27, wherein said member client device being designed such that a unique password individually assigned to said registered member and a disclosure request signal for stored information in said database are sent to said server device through said communications network means, in order that certain information preauthorized for disclosure contained in stored information in said database, including information about past supply of said supported product registered in the database, is received for display from said server device, on the condition of matching said password.

29. A retail outlet client device for use by an designated retail outlet, said retail outlet client device being utilized by an designated retail outlet in a system where in data is transferred through a communications network means between a member client device for use by a new member who is to be supplied with said supported product and a server device for use by a product supplier supplying said supported product, whereby information of said new member, together with assignment information associating said new member with a selected designated retail outlet, is stored in a database and said new member is registered as a new member, while also registering said new member in a recurring membership fee collection system as being subject to collection of a membership fee; for use when, in response to a request from said new member and on the condition of verification of payment of the recurring membership fees by said membership fee collection system, said product supplier supplies said supported product to said new member on an ongoing basis through said selected designated retail outlet associated with registered member in said assignment information; wherein said retail outlet client device is connected to said server device through a communications network means, whereby by sending to said server through said communications network means a unique password individually assigned to said designated retail outlet and a disclosure request signal for stored information in said database, certain information preauthorized for disclosure contained in stored information in said database, including information about said registered member associated with said designated retail outlet, is received for display from said server device, on the condition of matching said password.

30. A database accessible by a server device that is employed by a product supplier who supplies a supported product requiring ongoing support, wherein the database being **characterized by**:
contains a member registration file that registers member information relating to a registered member who is supplied with said supported product, and a retail outlet registration file that registers retail outlet information relating to a plurality of designated retail outlets that can act as supply points for said supported product; and having stored therein assignment information that associates all registered members registered in said member registration file with any selected designated retail outlet among said plurality of designated retail outlets registered in said retail outlet registration file;
being capable of providing, to a member client device connected to said server device through communications network means for member registration application by a new member, retail outlet information relating to a plurality of designated retail outlets that can serve as supply points for said supported product; and receiving from an external system payment information for recurring membership fees assessed on all of said registered members, storing this membership fee payment in association with said registered members, and additionally storing supply information for said supported product for said registered members in association with said registered members; and
being used when said product supplier, on a condition of receipt of said recurring membership fees, supplies said supported product to said registered members through said selected designated retail outlets associated with said registered members.

31. A computer-associated database according to claim 30, wherein said database designed with a relational data structure, in which data for registered members and designated retail outlets is represented in relational form.

32. A computer program to be loaded by a member client device for use by a new member who will be supplied with a supported product requiring ongoing support, when a database administered by a server device for use by a product supplier who supplies said supported product has stored thereon information about registered members to be supplied with said supported product, information about a plurality of designated retail outlets that can act as points for supplying said supported product to said registered members, and assignment information that associates all of registered members separately with any selected designated retail outlet among said .plurality of designated retail outlets; and on a condition of payment of recurring membership fees by a said registered member, in response to a request from said registered member, said product' supplier supplies said supported product on an ongoing basis to said registered member through said selected designated retail outlet associated with said registered member, wherein the computer program connects said member client device to said server device through communications network means; displays on said member client device a new member registration form, prompts said new member to input information about said new member into said member client device, and transmits the input new member information to said server device through said communications network means; displays on said member client device retail outlet information relating to retail outlets serving as supply points of said supported product to said new member, prompting said new member to input into said client device retail outlet designating information designating a said selected designated retail outlet; and transmits the input retail outlet designating information to said server device through said communications network means.

33. A computer readable signal, said signal including a computer program defined in claim 32.
